Europäisches Patentamt

European Patent Office

Office européen des brevets

(19)

(11) Veröffentlichungsnummer: **0 245 751**
**B1**

(12) **EUROPÄISCHE PATENTSCHRIFT**

(45) Veröffentlichungstag der Patentschrift:
08.11.89

(51) Int. Cl.⁴: **B01J 8/38**

(21) Anmeldenummer: 87106487.9

(22) Anmeldetag: 05.05.87

(54) Verfahren zur Durchführung endothermer Prozess.

(30) Priorität: 09.05.86 DE 3615622

(43) Veröffentlichungstag der Anmeldung:
19.11.87 Patentblatt 87/47

(45) Bekanntmachung des Hinweises auf die Patenterteilung:
08.11.89 Patentblatt 89/45

(84) Benannte Vertragsstaaten:
DE FR GB IT NL

(56) Entgegenhaltungen:
DE-A- 3 118 931
DE-B- 1 767 628
FR-A- 1 152 928
FR-A- 2 313 120
US-A- 3 309 780

CHEMIE-INGENIEUR TECHNIK, Band 55, Nr. 2,
Februar 1983, Seiten 87-93, Nürnberg, DE; L. REH et al.:
"Wirbelschicht-Prozesse für die Chemie- und
Hütten-Industrie, die Energieumwandlung und den
Umweltschutz"

(73) Patentinhaber: METALLGESELLSCHAFT AG,
Reuterweg 14 Postfach 3724, D-6000 Frankfurt/M.1(DE)
Patentinhaber: VEREINIGTE ALUMINIUM-WERKE
AKTIENGESELLSCHAFT, Berlin - Bonn
Postfach 2468 Georg-von-Boeselager-Strasse 25,
D-5300 Bonn 1(DE)

(72) Erfinder: Stockhausen, Werner, An der Bleiche 4,
D-6368 Bad Vilbel 3(DE)

(74) Vertreter: Rieger, Harald, Dr., Reuterweg 14,
D-6000 Frankfurt am Main(DE)

## Beschreibung

Die Erfindung betrifft ein Verfahren zur Durchführung endothermer Prozesse an feinkörnigen Feststoffen in einer aus Wirbelschichtreaktor, Abscheider und Rückführleitung gebildeten zirkulierenden Wirbelschicht, der ein mehrstufiger, mit Abgas der zirkulierenden Wirbelschicht betriebener Vorwärmer vorgeschaltet und ein mehrstufiger Wirbelkühler nachgeschaltet ist, wobei man

a) dem Wirbelschichtreaktor der zirkulierenden Wirbelschicht sauerstoffhaltiges Gas als Fluidisierungsgas und in einer höheren Eintragsebene als Sekundärgas sowie Brennstoff zwischen den Eintragsebenen für das sauerstoffhaltige Gas zuführt,
b) das sauerstoffhaltige Sekundärgas zuvor im nachgeschalteten Wirbelkühler durch direkten Wärmeaustausch vorwärmt und
c) das sauerstoffhaltige Fluidisierungsgas zuvor im nachgeschalteten Wirbelkühler durch indirekten Wärmeaustausch vorwärmt.

Ein Verfahren der gattungsgemäßen Art ist aus der DE-AS 17 67 628 bekannt. Es zeichnet sich dadurch aus, daß die Durchführung endothermer Prozesse in Folge der Rückführung der Abwärmen von Abgas und Produkt in den Prozeß mit einem geringen Energiebedarf pro Mengeneinheit des Produktes verbunden ist.

Obgleich sich dieses Verfahren wegen der vorgenannten Vorteile durchgesetzt hat, ist es aus prozeßtechnischen Gründen nicht möglich, die nach ersten Kühlstufen dem Produkt noch anhaftende Restwärme durch weitere Abkühlung für den Prozeß selbst nutzbar zu machen. Die noch gewinnbare, aber auf niedrigem Temperaturniveau anfallende Wärme kann allenfalls außerhalb des eigentlichen Prozesses, d.h. in anderen Betriebsteilen Verwendung finden. Eine derartige sinnvolle anderweitige Verwendung bereitet jedoch zunehmend Schwierigkeiten, da es häufig bereits genügend Lieferanten für "Abfallwärme", d.h. Wärme auf niedrigem Temperaturniveau, gibt. Es läßt sich abschätzen, daß durch die im Prozeß selbst nicht nutzbar zu machende "Abfallwärme" ca. 10 bis 20 % der im Prozeß eingesetzten Primärenergie verloren gehen.

Aufgabe der Erfindung ist es, ein Verfahren zur Durchführung endothermer Prozesse an feinkörnigen Feststoffen bereitzustellen, das die Nachteile der bekannten Verfahren vermeidet, insbesondere eine stärkere Nutzung der Produktwärme innerhalb des Gesamtprozesses gestattet und dennoch in einfacher Weise durchführbar ist.

Die Aufgabe wird gelöst, indem das Verfahren der eingangs genannten Art entsprechend der Erfindung derart ausgestaltet wird, daß man mindestens einen wesentlichen Teil des Aufgabegutes in einer - in Richtung des Feststoffflusses gesehen - ersten Vorwärmstufe durch indirekten Wärmeaustausch vorwärmt, das hierzu erforderliche Wärmeträgermedium in der zweiten Stufe des Wirbelkühlers aufheizt und nach Durchgang durch die Vorwärmstufe wieder zur zweiten Stufe des Wirbelkühlers zurückführt und das erforderliche sauerstoffhaltige Fluidisierungsgas lediglich in der ersten Stufe des Wirbelkühlers aufheizt.

Zwar ist es aus der FR-PS 11 52 928 bekannt, bei einem Verfahren zur thermischen Behandlung Produkt in einer Wirbelschicht gegen ein im Kreislauf geführtes Kühlmittel zu kühlen und mit Hilfe des dabei aufgeheizten Kühlmittels die Vorwärmstufe des Prozesses zu betreiben. Hierbei findet jedoch parallel zur Aufheizung des Kühlmittels auch eine Vorwärmung von Verbrennungsluft statt, so daß eine gestufte Kühlung unter gleichzeitiger Berücksichtigung einer differenzierten Verfahrensführung im Sinne der vorliegenden Erfindung nicht vorhanden ist.

Bei der Durchführung endothermer Prozesse wird ein erheblicher Teil des Energiebedarfs zum Trocknen und Erwärmen des üblicherweise feuchten Einsatzmaterials benötigt. Mit Hilfe des erfindungsgemäßen Verfahrens gelingt es, einen großen Teil dieses Energiebedarfs mit einem Wärmeträgermedium einzubringen, das auf vergleichsweise niedrigem Temperaturniveau liegt und dadurch eine Nutzung dieser sonst nicht im Prozeß nutzbar zu machenden Abwärme ermöglicht.

Prinzipiell kann für die erste feststoffseitige Vorwärm- und gegebenenfalls Trocknungsstufe jede mit Heizflächen für den indirekten Wärmeaustausch ausrüstbare Vorrichtung eingesetzt werden. Entsprechend einer bevorzugten Ausgestaltung der Erfindung wird die Vorwärmstufe als indirekt beheizter Trommeltrockner (-vorwärmer) oder indirekt beheizte stationäre Wirbelschicht, gegebenenfalls in Kaskadenform (mehrstufig) ausgebildet.

Um insbesondere Anbackungen in der ersten Vorwärmstufe zu vermeiden, ist es weiterhin vorteilhaft, der der Vorwärmung dienenden stationären ggf. mehrstufigen Wirbelschicht einen Venturireaktor mit Abscheider vorzuschalten. Hierdurch wird erreicht, daß das frische und in der Regel feuchte Aufgabegut durch das bereits vorgewärmte und über das System Venturireaktor, Abscheider, Wirbelschichtreaktor, zirkulierende Gut verdünnt wird und so die Neigung zum Anbacken verliert.

Üblicherweise wird das frische Aufgabegut zwischen dem indirekt betriebenen Vorwärmer und der gasseitig letzten Vorwärmstufe aufgeteilt. Der Grad der Aufteilung richtet sich im wesentlichen nach der dem indirekt betriebenen Vorwärmer zur Verfügung stehenden Wärmemenge. Das indirekt vorgewärmte Aufgabegut wird dann mit dem frischen, unbehandelten Aufgabegut dem gasseitig letzten Vorwärmer zugeführt.

Zur Kühlung des Produktes kann ein Wirbelkühler mit mehreren vom Produkt nacheinander durchflossenen Kühlkammern dienen. Hierbei ist darauf zu achten, daß durch ständig abnehmende Höhe der Zwischenwände ein gezielter Materialfluß erfolgt und eine Rückmischung in die davorliegende Kühlkammer weitgehend ausgeschlossen wird. Die Kühlung kann jedoch auch in mehreren Wirbelkühlern vorgenommen werden, die dann zweckmäßigerweise jeweils eine Funktion ausüben (Aufheizung Fluidisierungsgas, Aufheizung Wärmeträgermedium, Endkühlung). Als Wärmeträgermedium können z.B.

Druckwasser, unter Normaldruck hochsiedende Flüssigkeiten und dergleichen verwendet werden.

Die innerhalb des erfindungsgemäßen Verfahrens zum Einsatz kommende zirkulierende Wirbelschicht zeichnet sich dadurch aus, daß - im Unterschied zu der "klassischen" Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und darüber befindlichem Staubraum ist nicht existent; jedoch nimmt innerhalb des Reaktors die Feststoffkonzentration von unten nach oben ständig ab. Bezüglich weiterer Einzelheiten zu zirkulierenden Wirbelschichten wird auf die DE-AS 17 67 628 bzw. US-PS 3 579 616 sowie auf L. Reh et al "Wirbelschichtprozesse für die Chemie- und Hüttenindustrie, die Energieumwandlung und den Umweltschutz", Chem.Ing.Techn. 55 (1983), Nr. 2, Seiten 87 bis 93 verwiesen.

Das erfindungsgemäße Verfahren ist vorzugsweise anwendbar für

1. Kalzinierprozesse für anorganische Verbindungen, wie Magnesium-, Eisen- oder Aluminiumhydroxid sowie für Phosphat

2. Brennprozesse und Spaltprozesse, z.B. für Kalk, Magnesit, Dolomit, Eisensulfat oder Magnesiumsulfat, bzw. zum Entsäuern von Zement,

3. Chemisch-metallurgische Prozesse bei hohen Temperaturen, z.B. Oxidation von Ilminit.

Die jeweilige optimale Aufteilung der Produktkühlung auf die Aufheizung der sauerstoffhaltigen Verbrennungsgase und das Wärmeträgermedium ist von der Art des zu behandelnden Ausgangsstoffes, insbesondere von dem zur Durchführung des Prozesses erforderlichen Energiebedarf abhängig. Dieser gibt den Brennstoffbedarf und damit - bei Verwendung von Luft als sauerstoffhaltiges Verbrennungsgas und bei nahstöchiometrischer Verbrennung - die Luftmenge vor. Je kleiner das Verhältnis Verbrennungsluftmenge/Produktdurchsatz ist, desto weniger Wärme kann im Wirbelschichtkühler aus dem Produkt zur Luftvorwärmung zurückgewonnen werden, desto mehr Wärme steht zur indirekten Trocknung/Vorwärmung des Aufgabegutes zur Verfügung und desto höher ist das Temperaturniveau der anfallenden zur Aufheizung des Wärmeträgermediums einsetzbaren Wärme. Gleichzeitig steht mit niedrigem Luft/Produktverhältnis auch wenig Wärmemenge im Abgas des Prozesses zur direkten Trocknung/Vorwärmung des Aufgabegutes zur Verfügung.

Generell läßt sich sagen, daß der Vorteil der Ausnutzung der Produktwärme zur Aufheizung des Wärmeträgermediums für die indirekte Produktvorwärmung/Produkttrocknung in dem Maße steigt, in dem sich das Verhältnis von Verbrennungsluftmenge zu Produktmenge verkleinert.

Die Erfindung wird anhand der Figuren und Beispiele beispielsweise und näher erläutert.

Es veranschaulichen

Figur 1 ein Blockschema und die

Figuren 2 und 3 Fließschemata des erfindungsgemäßen Verfahrens.

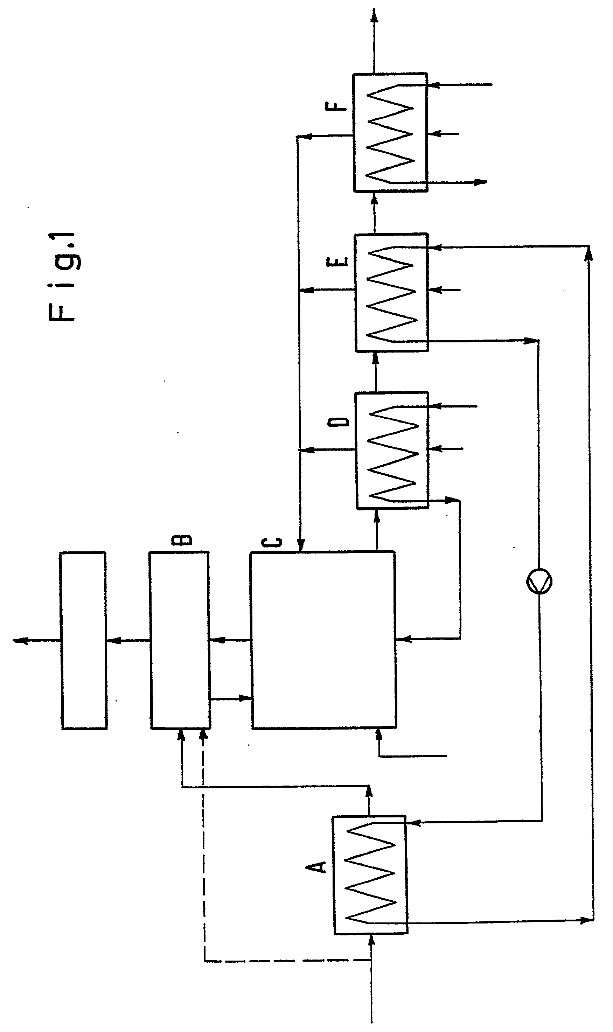

Im Blockschema der Fig. 1 stellen (A) den mittels Wärmeträgermedium indirekt aufgeheizten Vorwärmer, (B) den mit Abgas direkt beheizten Vorwärmer, (C) die zirkulierende Wirbelschicht und (D,E) und (F) die der zirkulierenden Wirbelschicht (C) nachgeschalteten Wirbelkühler dar.

In Fließrichtung des Feststoffes gesehen werden im ersten Wirbelkühler (D) der zirkulierenden Wirbelschicht (C) zuzuführendes Fluidisierungsgas und im zweiten Wirbelkühler (E) das Wärmeträgermedium für den Vorwärmer (A) aufgeheizt. Im dritten Wirbelkühler (F) erfolgt die Endkühlung mit z.B. Wasser.

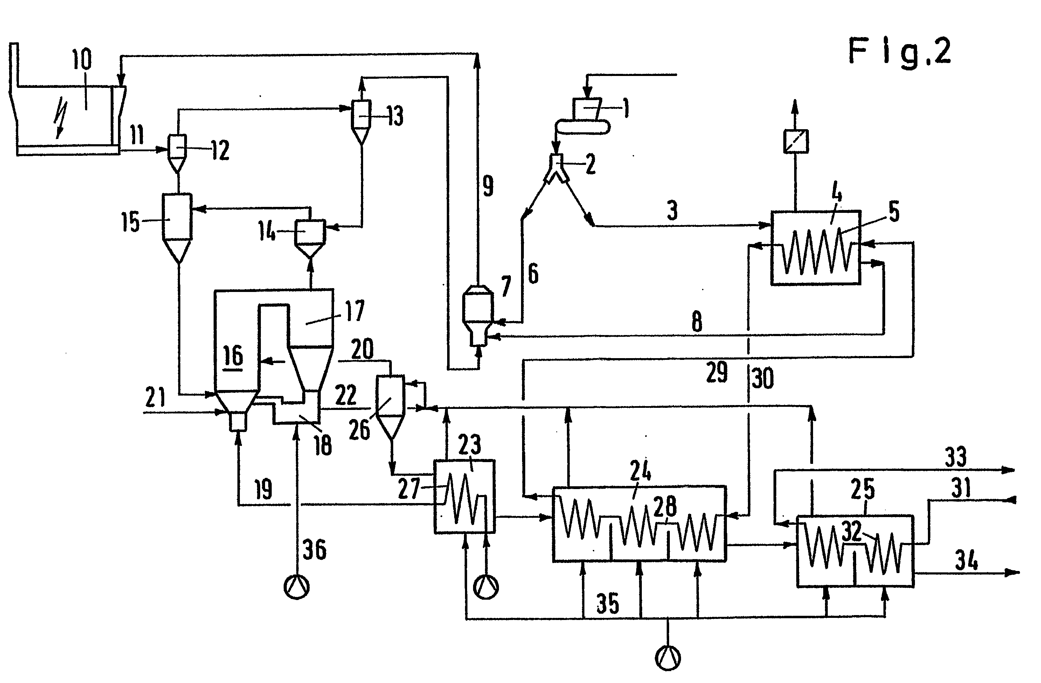

Bei dem detaillierten Fließschema gemäß Fig. 2 erfolgt die Aufgabe über eine Dosierbandwaage (1) in eine Verteilvorrichtung (2), die das Ausgangsmaterial über Leitung (3) dem indirekt beheizten Vorwärmer (4) mit Heizfläche (5) und über Leitung (6) einer Vorrichtung (7) zur pneumatischen Förderung zuführt. Nach dem Durchgang durch den Vorwärmer (4) wird das Material über Leitung (8) der Vorrichtung (7) zugeleitet und gemeinsam mit dem direkt zugeführten Aufgabegut über Leitung (9) pneumatisch in den als Vorabscheider ausgebildeten Eingangsbereich des Elektrofilters (10) eingetragen. Hierbei erfolgt bereits die erste Vorwärmung. Zur Förderung dient das Abgas der durch direkten Gas/Feststoff-Kontakt betriebenen Vorwärmstufe. Im Elektrofilter (10) wird das Gas gereinigt und in einen Kamin (nicht dargestellt) abgeleitet.

Der Feststoff wird dann vom Elektrofilter (10) mittels Leitung (11) über ein aus Venturiwirbler (12) und Abscheidezyklon (13) bestehendes Vorwärmsystem und über ein weiteres aus Venturiwirbler (14) und Abscheidezyklon (15) bestehendes Vorwärmsystem der aus Wirbelschichtreaktor (16), Rückführzyklon (17) und Rückführleitung (18) gebildeten zirkulierenden Wirbelschicht zugeleitet.

Der Wirbelschichtreaktor der zirkulierenden Wirbelschicht wird mit Fluidisierungsgas aus Leitung (19), Sekundärgas aus Leitung (20) und Brennstoff aus Leitung (21) versorgt. Aus der zirkulierenden Wirbelschicht wird kontinuierlich nach hinreichend langer Verweilzeit ein Teilstrom Feststoff abgezogen (Leitung 22) und mittels der Abgase der Wirbelkühler (23, 24 und 25) in den Zyklonabscheider (26) eingetragen. Von hier gelangt der Feststoff in den Wirbelkühler (23), der die erste Kühlstufe bildet und durch Kühlflächen (27) dem Wirbelschichtreaktor (16) über Leitung (19) zuzuführende Fluidisierungsgas indirekt aufheizt. Danach gelangt der Feststoff in den Wirbelkühler (24), der mit drei Kühlkammern mit im Gegenstrom zum Feststoff durchströmten Kühlflächen (28) ausgestattet ist. Hier erfolgt die Aufheizung des im geschlossenen Kreislauf über (29,5,30) und Kühlflächen (28) geführten Kühlmediums. Im dritten Wirbelkühler (25) erfolgt die Endkühlung des Feststoffes gegen Kühlwasser, das durch Leitung (31), Kühlflächen (32) und Leitung (33) geführt wird. Der gekühlte Feststoff wird schließlich über Leitung (34) ausgetragen.

Die Versorgung der Wirbelkühler (23, 24 und 25) mit Fluidisierungsgas geschieht über ein mit (35) bezeichnetes Verteilersystem. Die Leitung (36) dient der Anfluidisierung des U-förmigen, in der Rückführleitung (18) angebrachten Verschlusses, wodurch eine einwandfreie Fließfähigkeit des in den Wirbelschichtreaktor (16) zurückzuführenden Gutes gewährleistet ist.

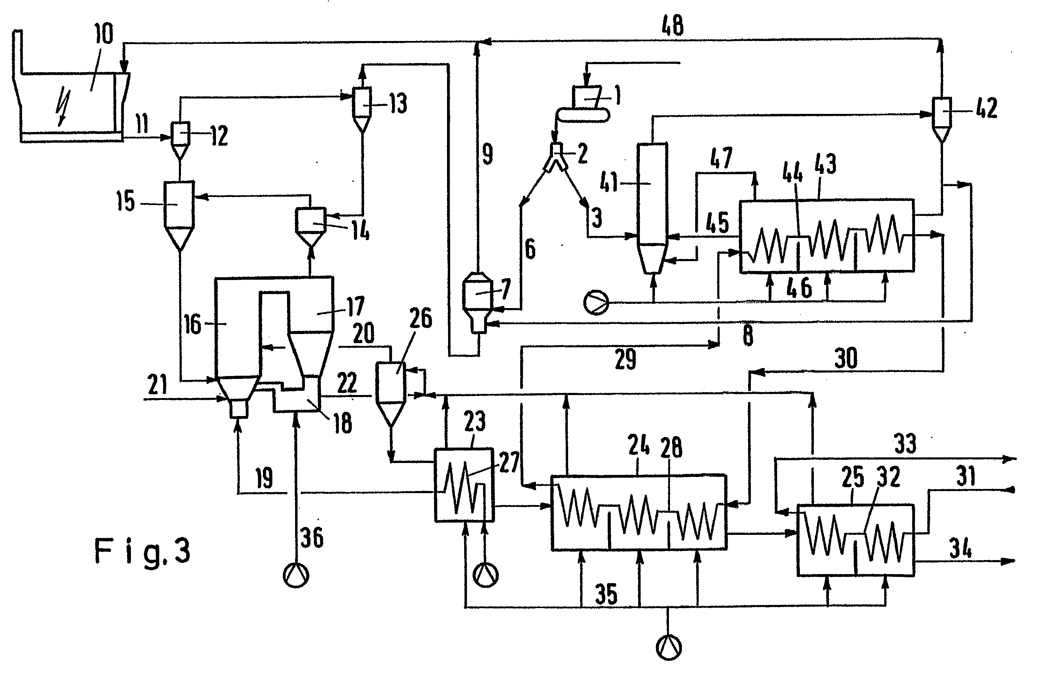

Im Fließschema gemäß Fig. 3 erfolgt die Vorwärmung des von der Verteilervorrichtung (2) über Leitung (3) herangeführten Ausgangsstoffes in einem aus Venturireaktor (41), Abscheidezyklon (42) und Wirbelschichtreaktor (43) mit Heizflächen (44) gebildeten Vorwärmsystem. Hierbei wird der frische Ausgangsstoff im Venturireaktor (41) dem über das vorgenannte Vorwärmsystem zirkulierenden Feststoff zugemischt und mit diesem über Abscheidezyklon (42), Wirbelschichtreaktor (43) und Rückführleitung (45) geführt. Im Wirbelschichtreaktor (43) erfolgt die Vorwärmung und ggf. Vortrocknung mit dem über Leitung (29) herangeführten Wärmeträgermedium, das im Gegenstrom zum Feststoff durch miteinander verbundene, durch drei Kammern geführte Heizflächen (44) fließt. Ein der Aufgabemenge entsprechender Feststoffanteil wird über Leitung (8) der Vorrichtung (7) zur pneumatischen Förderung zugeleitet.

Der Wirbelschichtreaktor (43) wird nach dem Prinzip der klassischen Wirbelschicht mit Luft, die über das Verteilersystem (46) herangeführt wird, betrieben. Das Abgas des Wirbelschichtreaktors (43) wird über Leitung (47) abgeführt und dient dem Venturireaktor (41) als Fördermedium. Das der zugeführten Fluidisierungsgasmenge entsprechende Abgas wird vom Abscheidezyklon (42) über Leitung (48) der über Leitung (9) geförderten Gas/Feststoff-Suspension zugemischt.

Die weiteren Elemente des Fließschemas der Fig. 3 entsprechen denen der Fig. 2 und sind in gleicher Weise bezeichnet.

Beispiel (mit Bezug auf Fig. 2)

Über die Dosierbandwaage (1) werden stündlich 106 t filterfeuchtes Aluminiumhydroxid mit einer Feuchte von 10 Gew.% aufgegeben. Hiervon gelangen 85 t/h zum Vorwärmer (4), der als Trommeltrockner ausgebildet ist, und 21 t/h zur Vorrichtung (7) zur pneumatischen Förderung. Im Vorwärmer (4) erfolgt eine mit einer Trocknung verbundene Vorwärmung auf 100°C gegen Druckwasser als Heizmedium, das in einer Menge von 150 t/h über Leitung (29) herangeführt wird und sich von der Eintrittstemperatur von 200°C auf 160°C abkühlt. Das abgekühlte Heizmedium wird über Leitung (30) zum Wirbelkühler (24) zurückgeführt.

Der vorgewärmte Feststoff wird dann gemeinsam mit dem frischen Aluminiumhydroxid über Leitung (9) in das Elektrofilter (10) geleitet. Auf diesem Weg erfolgt bereits eine weitere Aufwärmung durch Ausnutzung der fühlbaren Wärme der Abgase des Abscheidezyklons (13) auf 150°C. Vom Elektrofilter (10) wird der Feststoff in die Venturiwirbler (12) und (14) geführt, in denen eine Aufheizung auf zunächst 260°C und dann auf 410°C erfolgt.

In der zirkulierenden Wirbelschicht (16,17,18) herrscht eine Kalziniertemperatur von 1 000°C, die durch Verbrennung von schwerem Heizöl von 4,1 t/h ($H_u$ = 40 900 kJ/kg) mittels 10 000 Nm³/h Fluidisierungsluft und 42 000 Nm³/h Sekundärluft erzeugt wird. Die Fluidisierungsluft ist durch indirekten Wärmeaustausch im Wirbelkühler (23) auf 520°C und die Sekundärluft durch direkten Wärmeaustausch in den Wirbelkühlern (23,24 und 25) sowie durch die Feststofförderung in den Abscheidezyklon (26) auf 670°C vorgewärmt.

Aus der zirkulierenden Wirbelschicht wird nach einer mittleren Verweilzeit von 10 min. Aluminiumoxid zur Kühlung über Leitung (22) und Abscheidezyklon (26) in den Wirbelkühler (23) geleitet. Im Wirbelkühler (23) wird das Aluminiumoxid unter Aufheizung der dem Wirbelschichtreaktor (16) zuzuführenden Fluidisierungsluft auf 550°C gekühlt. Im Wirbelkühler (24) erfolgt eine weitere Abkühlung auf 200°C, wobei das für den Vorwärmer (4) bestimmte Heizmedium (150 t/h Druckwasser) dreistufig von 160°C auf 200°C aufgeheizt wird.

Im Wirbelkühler (25) geschieht schließlich die Endkühlung gegen Kühlwasser auf 80°C.

Die über Leitung (34) ausgetragene Produktion beträgt 62,5 t/h, der Energiebedarf 2 680 kJ/kg erzeugten Aluminiumoxids.

**Patentansprüche**

1. Verfahren zur Durchführung endothermer Prozesse an feinkörnigen Feststoffen in einer aus Wirbelschichtreaktor, Abscheider und Rückführleitung gebildeten zirkulierenden Wirbelschicht, der ein mehrstufiger, mit Abgas der zirkulierenden Wirbelschicht betriebener Vorwärmer vorgeschaltet und ein mehrstufiger Wirbelkühler nachgeschaltet ist, wobei man

a) dem Wirbelschichtreaktor der zirkulierenden Wirbelschicht sauerstoffhaltiges Gas als Fluidisierungsgas und in einer höheren Eintragsebene als Sekundärgas sowie Brennstoff zwischen den Eintragsebenen für das sauerstoffhaltige Gas zuführt,

b) das sauerstoffhaltige Sekundärgas zuvor im nachgeschalteten Wirbelkühler durch direkten Wärmeaustausch vorwärmt und

c) das sauerstoffhaltige Fluidisierungsgas zuvor im nachgeschalteten Wirbelkühler durch indirekten Wärmeaustausch vorwärmt,

dadurch gekennzeichnet, daß man mindestens einen wesentlichen Teil der Feststoffe in einer - in Richtung des Feststoffflusses gesehen - ersten Vorwärmstufe durch indirekten Wärmeaustausch vorwärmt, das hierzu erforderliche Wärmeträgermedium in der zweiten Stufe des Wirbelkühlers aufheizt und nach Durchgang durch die Vorwärmstufe wieder zur zweiten Stufe des Wirbelkühlers zurückführt und das erforderliche sauerstoffhaltige Fluidisierungsgas lediglich in der ersten Stufe des Wirbelkühlers aufheizt.

2. Verfahren nach Anspruch 1, dadurch gekennzeichnet, daß man die feststoffseitig erste Vorwärmstufe als indirekt beheizten Trommeltrockner ausbildet.

3. Verfahren nach Anspruch 1, dadurch gekennzeichnet, daß man die feststoffseitig erste Vorwärmstufe als stationäre, indirekt beheizte Wirbelschicht, ggf. in Kaskadenform, ausbildet.

4. Verfahren nach Anspruch 3, dadurch gekennzeichnet, daß man der stationären Wirbelschicht einen Venturireaktor mit Abscheider derart vorschaltet, daß sich ein über Venturireaktor, Abscheider, Wirbelschichtreaktor, Venturireaktor fließender Feststoffkreislauf ausbildet.

## Claims

1. Method for carrying out endothermal processes on fine-grained solids in a circulating fluidised bed formed by a fluidised bed reactor, separator and recycling line, which bed is preceded with a multi-stage pre-heater which is operated with waste gas from the circulating fluidised bed, and succeeded by a multi-stage fluidising cooler, in which

a) oxygen-containing gas is supplied to the fluidised bed reactor of the circulating fluidised bed as a fluidising gas and on a higher entrance level as a secondary gas, and fuel is supplied between the entrance levels for the oxygen-containing gas,

b) the oxygen-containing secondary gas is previously pre-heated by direct heat exchange in the succeeding fluidising cooler, and

c) the oxygen-containing fluidising gas is previously pre-heated by indirect heat exchange in the succeeding fluidising cooler,

characterised in that at least a substantial part of the solids is pre-heated by indirect heat exchange in a pre-heating stage, which is first in the direction of flow of the solids, the heat transfer medium required for this purpose is heated up in the second stage of the fluidising cooler and after passing through the preheating stage is recycled to the second stage of the fluidising cooler, and the required oxygen-containing fluidising gas is heated up only in the first stage of the fluidising cooler.

2. Method according to Claim 1, characterised in that the first pre-heating stage on the solids side is designed as an indirectly heated drum dryer.

3. Method according to Claim 1, characterised in that the first pre-heating stage on the solids side is designed as a stationary, indirectly heated fluidised bed, optionally in cascade arrangement.

4. Method according to Claim 3, characterised in that a venturi reactor with a separator precedes the stationary fluidised bed so that a solids circulation flowing via the venturi reactor, separator, fluidised bed reactor, venturi reactor is formed.

## Revendications

1. Procédé pour effectuer des processus endothermiques sur des matières solides à grains fins dans un lit fluidisé circulant formé d'un réacteur à lit fluidisé, d'un séparateur et d'un conduit de recyclage, en amont duquel est monté un dispositif de préchauffage à plusieurs étages, fonctionnant avec le gaz sortant du lit fluidisé circulant, et en aval duquel est monté un dispositif de refroidissement à lit fluidisé à plusieurs étages, qui consiste

a) à envoyer au réacteur à lit fluidisé du lit fluidisé circulant du gaz contenant de l'oxygène comme gaz de fluidisation et, dans un plan d'introduction plus élevé, comme gaz secondaire, ainsi que du combustible entre les plans d'introduction du gaz contenant de oxygène,

b) à préchauffer d'abord, par échange de chaleur directe, le gaz secondaire contenant de l'oxygène dans le dispositif de refroidissement à lit fluidisé monté en aval, et

c) à préchauffer d'abord, par échange de chaleur indirecte, le gaz de fluidisation contenant de l'oxygène dans le dispositif de refroidissement à lit fluidisé monté en aval,

caractérisé en ce que l'on préchauffe, par échange de chaleur indirecte, au moins une partie essentielle des matières solides dans un premier – considéré dans le sens du passage des matières solides–étage de préchauffage, on chauffe le milieu caloporteur nécessaire à cet effet dans le deuxième étage du dispositif de refroidissement à lit fluidisé, et on le retourne, après passage dans l'étage de préchauffage, au deuxième étage du dispositif de refroidissement à lit fluidisé, et on chauffe le gaz de fluidisation contenant de l'oxygène, qui est nécessaire, seulement dans le premier étage du dispositif de refroidissement à lit fluidisé.

2. Procédé suivant la revendication 1, caractérisé en ce que l'on constitue le premier étage de chauffage, côté matières solides, sous la forme d'un dispositif de séchage à tambour chauffé par voie indirecte.

3. Procédé suivant la revendication 1, caractérisé en ce que l'on constitue le premier étage de préchauffage, côté matières solides, sous la forme d'un lit fluidisé fixe chauffé par voie indirecte, le cas échéant en forme de cascade.

4. Procédé suivant la revendication 3, caractérisé en ce qu'on monte, en amont du lit fluidisé fixé, un réacteur à venturi avec séparateur, de manière à constituer un circuit fermé pour les matières solides, passant par le réacteur à venturi, le séparateur, le réacteur à lit fluidisé et le réacteur à venturi.

F i g.1

Fig.2

EP 0 245 751 B1

Fig.3